# EUROPEAN PATENT APPLICATION

(11) **EP 1 354 544 A2**
(43) Date of publication of application: **22.10.2003**
(21) Application number: 03075980.7
(22) Date of filing: 02.04.2003
(51) Int. Cl.: A47J 43/27, B65D 51/24, B65D 79/00, A23P 1/16, A23C 9/154

(54) **Container for a foamable liquid**

(30) Priority: 05.04.2002 NL 1020321
(71) Applicant: Campina B.V., 5301 LB Zaltbommel (NL)
(72) Inventor: Kok, Johannes Arnoldus, 5555 KZ Valkenswaard (NL)
(74) Representative: Brookhuis, Hendrik Jan Arnold

(57) **Abstract**

The invention relates to a container for a foamable liquid, comprising a liquid reservoir (1) for holding a store of the foamable liquid, a foam-generating member (2) for repeatedly generating portions of foam from the foamable liquid, and a delivery opening (6) which can be reclosed by means of an associated closure means (7).

## Description

The invention relates to a container for a foamable liquid, comprising a liquid reservoir for holding a store of the foamable liquid, in particular a liquid which is used for human consumption, more particularly a dairy product.

US 6,332,704 has disclosed a shakeable plastic cup which is intended to foam dairy products. The shakeable cup comprises a container and a lid, between which there is a separating screen. This screen divides the volume in the shakeable cup into two parts which have a volumetric ratio of 1:2, the smaller volume being located above the screen.

As a result of the shakeable cup being at most half filled with a liquid, for example milk, and the cup then being shaken vigorously, foam is formed as a result of the liquid mixing with the air in the shakeable cup under the influence of the screen. The screen is substantially conical in shape, with the result that the liquid and the foam formed from it, after they have been shaken, collect in the lower, larger part of the shakeable cup under the influence of the force of gravity.

A drawback of the shakeable cup described in US 6,332,704 is that the foam which is formed cannot easily be discharged from the shakeable cup. If, after the cup has been shaken and liquid and foam have been allowed to drip off the screen, the shakeable cup is opened and held in an inclined position in order to discharge the foam, the liquid which has not been converted into foam will flow out of the cup while the foam tends to remain in the cup. If the user wishes to remove substantially foam from the cup, he has to use a spoon, for example, to do so.

Another drawback is that the generation of foam by means of the shakeable cup described in US 6,332,704 requires vigorous and prolonged shaking.

It is an object of the invention to provide a container which allows foam to be generated in portions from a foamable liquid with a minimum of effort, so that it is no longer necessary to use a separate shakeable cup or other foaming aid and with which removal of mainly foam from the container does not require any additional means.

The invention achieves this object by means of a container for a foamable liquid, comprising a liquid reservoir for holding a store of the foamable liquid. The container is characterised in that it further comprises a foaming section. This foaming section comprises a foam-generating member for repeatedly generating portions of foam from the foamable liquid, and a delivery opening which can be reclosed by means of an associated closure means. The foaming section furthermore comprises a foam chamber, the volume of which is such that the foam chamber can contain one portion of foam. Also, a separating element between the foam chamber and the liquid reservoir is arranged in the foaming section, ensuring that liquid which has been converted into foam remains in the foam chamber and does not flow back to the liquid reservoir. In addition, there is a barrier means in the foaming section which acts as a barrier during delivery of liquid, so that during the delivery operation mainly foam leaves the container and so that the liquid which has not been converted into foam substantially remains in the liquid reservoir.

The base of the container is formed by the liquid reservoir, on top of which a foaming section is present. The foam-generating member each time generates one portion of foam from the foamable liquid. The foam which is formed in the foam chamber remains there, since, on account of the presence of a separating element between the liquid reservoir and the foam chamber, the liquid which has not been converted into foam can leave the foam chamber while the foam cannot.

During delivery of the foam, a barrier means becomes active, making that only relatively small amounts of liquid which has not been converted into foam flow out of the container.

The assembly of the reservoir and the foaming section can be closed air-tight. Preferably, the closure of the foaming section closes the entire container.

The container may be provided with a selection means which, even after a portion of foam has been generated, still makes it possible to select to allow mainly liquid to flow out of the container.

In practice, in many embodiments of the invention, both the separating element and the foam-generating member will be located in the region between the liquid reservoir and the foam chamber. Therefore, the separating element and the foam-generating member are preferably integrated in one component. A component of this type is preferably designed as a screen, the size of the openings in the screen being selected in such a way that both functions, namely foaming of the liquid and separation of liquid and foam, are satisfactorily fulfilled.

The volume of the liquid reservoir is preferably limited, so that the container can be gripped in one hand by an adult user. In that case, the foam-generating member can be designed in such a way that the foaming is realized by causing the liquid to move past the foam-generating member a number of times. Preferably this is achieved by shaking the container. It will be obvious that the properties of the liquid with regard to the formation of foam must be adapted accordingly.

In a preferred embodiment, the container is designed as a bottle, the foam-generating member and the separating element being arranged in or on the neck of the bottle. Preferably, the container is made of plastic.

It is possible for the container to be designed as a disposable container, in which case, the entire container (including the foaming section) is thrown away when the liquid reservoir is empty. On the other hand, it is also possible for the entire container to be adapted for reuse by making the container as a whole, including the liquid reservoir and the foaming section, of durable design. The foamable liquid can then be poured out of any desired refill container into the liquid reservoir, which can preferably be detached from the remainder of the container.

As an intermediate form, it is possible to elect for the liquid reservoir to be designed as a disposable container to which a foaming section which is purchased just once and is of durable design can be fitted. A foaming section of this type then preferably comprises at least a foam chamber, a foam-generating member, a separating element, a delivery opening and a closure means.

Exemplary embodiments of a container according to the invention will be explained in more detail below in a non-limiting manner with reference to the appended drawing, in which:

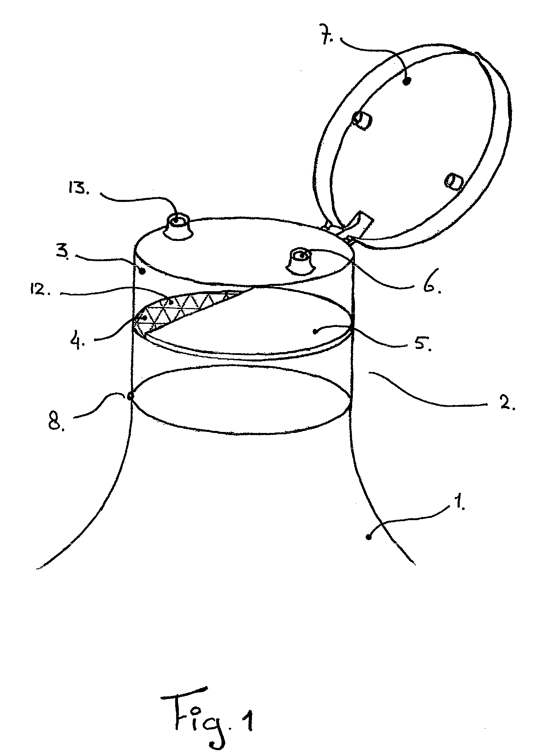

Figure 1 shows a foaming section in accordance with a first exemplary embodiment,

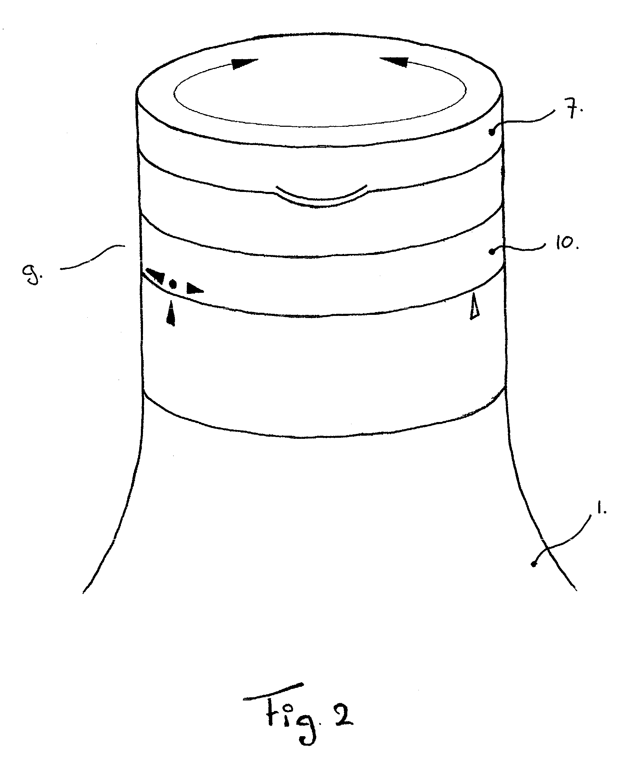

Figure 2 shows a foaming section in accordance with a second exemplary embodiment, as seen from the outside,
Figure 3 shows a foaming section in accordance with a second exemplary embodiment, with the selection means in a position in which the liquid is being foamed or in which during delivery mainly liquid flows out of the container,
Figure 4 shows a foaming section according to a second exemplary embodiment, with the selection means in an intermediate position,
Figure 5 shows a foaming section in accordance with a second exemplary embodiment, with the selection means in a position in which mainly foam flows out of the container during delivery.

In the exemplary embodiments shown, the container comprises a liquid reservoir 1 and a foaming section 2. The liquid reservoir 1 has a limited volume (for example 250 ml) and is made from plastic (for example three-layer PE) and is open at the top side. The liquid reservoir 1 is connected to the foaming section 2 n the vicinity of this opening. The connection 8 between the liquid reservoir 1 and the foaming section 2 is in this case produced by means of a screw thread.

In the foaming section 2 there is a foam chamber 3 with a volume of between 10 and 40 ml, for example 25 ml. There is a delivery opening 6 in the foam chamber 3 for delivering foam and/or liquid. This delivery opening 6 is provided with an associated, reusable, actuable closure means 7. There is also a ventilation member 13 which is arranged to let air to flow into the container during delivery. There is a screen 4, which simultaneously functions as a foam-generating member and as a separating element, arranged between the foam chamber 3 and the liquid reservoir 1.

In the foaming section 2 there is also a barrier means which, during delivery, makes that only a relatively small amount of liquid which has not been converted into foam flows out of the container. In the first exemplary embodiment shown, the barrier means is designed as a partition 5 which extends over more than half the surface area of the flow opening 12 between the liquid reservoir 1 and the foaming section 2.

The position of the partition 5 with respect to the delivery opening 6 is selected in such a way that, if the delivery opening 6 is held approximately in the 6 O'clock position during delivery, the partition 5 acts as a barrier to the liquid which is present in the liquid reservoir 1, so that the liquid does not flow out of the container.

A foamable liquid is present in the liquid reservoir 1. The foaming properties of the liquid and the design of the foam-generating member are matched to one another in such a manner that a portion of stable foam can be obtained with a minimum of effort on the part of the user.

The assembly operates as follows:
the container is closed by means of the closure means 7. The screen 4, which functions as a foam-generating member, is located in the vicinity of the flow opening 12 between the liquid reservoir 1 and the foaming section 2. The container is shaken a few times. By doing so, foam is formed as a result of the liquid passing through the screen 4. If the liquid composition and foaming section 2 are suitably matched to one another, this is achieved after the container has been shaken just a few times at a limited speed and with a limited movement amplitude. Foam located in the foam chamber 3 remains in this chamber since the foam cannot run out through small openings in the screen 4. However, the liquid which has not been converted into foam can do so and will flow out of the foam chamber 3 under the influence of the force of gravity.

When sufficient foam has been formed, the delivery opening 6 is opened by removal of the closure means 7. During delivery of the foam, the liquid is retained by the partition 5.

In practice, not all the liquid which has not been converted into foam will run back into the liquid reservoir. This is advantageous since the liquid residues make it easier to deliver the foam.

If the container is used to foam a dairy product to form cappuccino foam, tests have shown that a dairy product which comprises 80-95 per cent by weight, preferably 88-92 per cent by weight, most preferably 90 per cent by weight, of skimmed milk, 5-15 per cent by weight, preferably 8-12 per cent by weight, most preferably 10 per cent by weight, of cream with a fat content of 30-45 per cent by weight, and 0.10-2.5 per cent by weight, preferably 0.15-0.5 per cent by weight, of stabilizer is eminently suitable in combination with a foam-generating member which comprises a screen with openings of approximately 0.6 mm. In particular, the stabilizer is selected from the group consisting of alginate, carrageen or a combination thereof. It has been found that incorporating 0.15 per cent by weight of alginate and 0.02 per cent by weight of carrageen produces a product with excellent foaming properties, which product is optimally suitable to be held in the container according to the invention.

The dairy product is given a long shelf life by means of a UHT treatment followed by filling into the container under aseptic conditions. After the container has been shaken just a few times at a limited speed and with a limited movement amplitude, a portion of stable foam which is sufficient for one cup of cappuccino is formed.

The invention also relates to a container as described above in which the abovementioned liquid is accommodated.

The choice of the liquid composition and the design of the foam-generating member and the delivery opening are matched to one another in such a way that the foam which is formed can easily be delivered from the container.

In a second exemplary embodiment, the foaming section 2 is also provided with a selection means 9. In the example shown, the selection means 9 is designed as a rotatable element 10 which is integrated in the foaming section 2.

The rotatable element 10 comprises a partition 11 which rotates with the rotatable element 10. The rotatable partition 11 is at least large enough to be able to cover the opening between the liquid reservoir 1 and the foaming section 2 together with the fixed partition 5'.

Before the foam is formed, the rotatable partition 11 is rotated to above the fixed partition 5', so that the flow opening 12 between the liquid reservoir 1 and the foaming section 2 in which the screen 4 is located is as large as possible. This position is illustrated in Figure 3. If the container is shaken a few times, foam is formed from the foamable liquid under the influence of the screen 4. Foam which is located in the foam chamber 3 remains in the foam chamber since the foam cannot run through small openings in the screen 4. The liquid which has not been converted into foam can run through these openings and will flow out of the foam chamber 3 under the influence of the force of gravity.

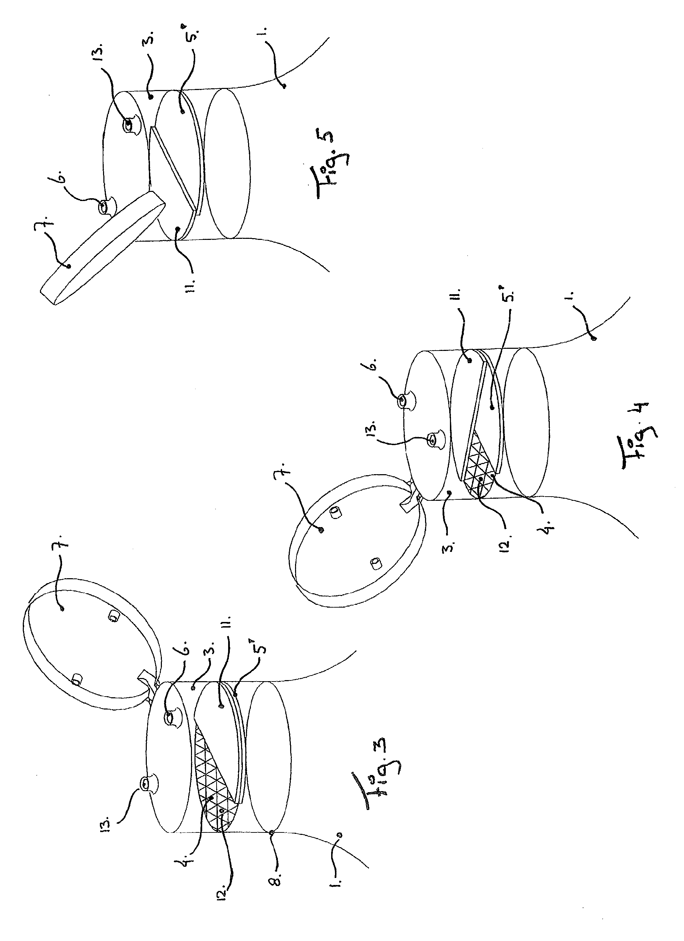

When sufficient foam has been formed, the rotatable element 10 is rotated via the position illustrated in Figure 4 into the foam delivery position (cf. Figure 5). The fixed partition 5' and the rotatable partition 11 together are now closing off the entire flow opening 12 between the liquid reservoir 1 and the foaming section 2, so that it is impossible for any liquid to flow out of the liquid reservoir 1 through the delivery opening 6 (cf. Figure 5).

If the user changes his mind and does in fact wish to deliver mainly liquid instead of mainly foam, he rotates the rotatable element back into the position shown in Figure 3.

As an alternative for the selection means 9 as described above it is possible that two separate delivery openings are provided, one delivery opening being arranged to deliver liquid and the other to deliver foam. These delivery openings are preferably arranged relatively to each other in such a way that either liquid or foam is delivered from the container.

In an embodiment which is not shown, a removable or breakable seal may be arranged over the opening of the liquid reservoir after the container has been filled, if appropriate under aseptic conditions. The user has to remove this seal prior to initial use, so that this seal acts as a tamperproofing means. In addition, this seal prevents foam from forming as a result of the movements which the container experiences during transport, for example. The user can reach the seal for removal, for example by unscrewing the foaming section of the liquid reservoir.

## Claims

1. Container for a foamable liquid, comprising
- a liquid reservoir (1) for holding a store of the foamable liquid,
**characterized in that** the container further comprises a foaming section (2), which foaming section (2) comprises:
- a foam-generating member for repeatedly generating portions of foam from the foamable liquid,
- a delivery opening (6) which can be reclosed by means of an associated closure means,
- a foam chamber (3) which can contain one portion of foam,
- a separating element between the foam chamber (3) and the liquid reservoir (1), which ensures that liquid which has been converted into foam remains in the foam chamber (3) and does not flow back to the liquid reservoir (1),
- a barrier means which acts as a barrier during the delivery of the liquid, so that during delivery substantially foam leaves the container and so that the liquid which has not been converted into foam substantially remains in the liquid reservoir (1).

2. Container according to claim 1, **characterized in that** the container also comprises:
a selection means (9) which offers the option of selecting to have mainly liquid flow out of the container instead of mainly foam during the delivery.

3. Container according to at least one of the preceding claims, **characterized in that** the foam-generating member and the separation element are integrated in a single structural element.

4. Container according to claim 3, **characterized in that** the structural element in which the foam-generating member and the separating element are integrated is designed as a screen.

5. Container according to at least one of the preceding claims, **characterized in that** the liquid reservoir (1) is of limited size, such that the entire container can be gripped by one hand of an adult user.

6. Container according to claim 5, **characterized in that** the foaming of the liquid is realized by causing the liquid to pass through the foam-generating member a number of times by shaking the container by hand.

7. Container according to at least one of the preceding claims, **characterized in that** the container is designed as a bottle, with the foaming section (2) arranged in the neck of the bottle.

8. Container according to at least one of the preceding claims, **characterized in that** a breakable seal is arranged over the opening of the liquid reservoir (1).

9. Foaming section according to at least one of the preceding claims, which foaming section (2) further comprises a connecting means for creating a removable, liquid-tight connection to a suitable holder for foamable liquid.

10. Foamable liquid for use in combination with a container or a foaming section (2) according to at least one of the preceding claims, **characterized in that** the liquid comprises 80-95 per cent by weight, preferably 88-92 per cent by weight, of skimmed milk, 5-15 per cent by weight, preferably 8-12 per cent by weight, of cream with a fat content of 30-45 per cent by weight, and 0.10-2.5 per cent by weight, preferably 0.15-0.5 per cent by weight, of stabilizer.

11. Foamable liquid according to claim 9, **characterized in that** the stabilizer is selected from the group consisting of alginate, carrageen or a combination thereof.

12. Container according to at least one of claims 1-8, which contains a liquid according to claim 10 or 11.
